# EUROPEAN PATENT SPECIFICATION

(11) **EP 2 556 956 B1**
(45) Date of publication and mention of the grant of the patent: **13.06.2018**
(21) Application number: 11766184.3
(22) Date of filing: 08.04.2011
(51) Int. Cl.: B32B 27/30, B32B 27/08

(54) **MULTILAYER SHEET FOR MOLDING WHICH IS HIGHLY GLOSSY EVEN AFTER A MOLDING PROCESS, AND METHOD FOR PREPARING SAME**
MEHRSCHICHTIGE FOLIE FÜR FORMUNGSOPERATIONEN MIT HOHEM GLANZ AUCH NACH DEM FORMUNGSPROZESS SOWIE HERSTELLUNGSVERFAHREN DAFÜR
FEUILLE MULTICOUCHE POUR MOULAGE QUI EST HAUTEMENT BRILLANTE MÊME APRÈS UN PROCESSUS DE MOULAGE, ET PROCÉDÉ POUR SA PRÉPARATION

(30) Priority: 08.04.2010 KR 20100032456
(43) Date of publication of application: 13.02.2013
(73) Proprietor: LG Hausys, Ltd., Seoul 150-721 (KR)
(72) Inventor: KIM, Hyung-Gon, Ulsan 680-778 (KR); KIM, Dong-Gon, Ulsan 680-012 (KR); LEE, Min-Ho, Busan 612-050 (KR); KIM, Gi-Jung, Busan 613-100 (KR)
(74) Representative: Prinz & Partner mbB
(86) International application number: PCT/KR2011/002468
(87) International publication number: WO 2011/126333

(56) References cited:
- EP-A1- 1 803 553
- EP-A1- 2 253 467
- JP-A- 2002 515 834
- KR-A- 20080 024 351
- KR-A- 20080 051 387
- KR-A- 20100 053 747
- KR-B1- 100 589 735
- KR-B1- 100 725 849
- US-A1- 2009 246 483
- US-A1- 2011 171 433

## Description

### [Technical Field]

The present invention relates to a multilayer sheet for insert molding.

### [Background Art]

A multilayer sheet for insert molding is widely used for various fields of interior decoration, building materials, etc. However, such multilayer sheets have problems of losing gloss during thermal molding. The inventors developed a multilayer sheet and a method of manufacturing the same, which may maintain high gloss during thermal molding at high temperature and has high hardness, excellent chemical resistance, scratch resistance and wear resistance.

WO 2010/036015 A2 discloses an insert sheet comprising a transparent film made for example from polymethyl methacrylate, a hairline layer formed on the surface of the transparent film and including a metal deposition layer formed on the hairline layer, and a support sheet formed on the metal deposition layer. The insert sheet may further comprise a surface protection layer made from acrylic resins, urethane resins, epoxy resins, polyester resins and fluorine resins.

US 2009/0246483 A1 discloses a matte resin film comprising a resin film substrate and a matte layer formed on at least a surface of the substrate, wherein the matte layer comprises a transparent resin an transparent fine particles dispersed therein.

EP 1 803 553 is directed to a matte acrylic resin film for thermoforming comprising an acrylic resin film base and a matte layer containing a matting agent and a curable binder resin, the matte layer being formed on one surface of the acrylic resin film base as the outermost layer.

EP 2 253 467 discloses a decorative sheet including an adhesive layer, a print layer, a transparent thermoplastic resin layer, a primer layer and a surface protection layer laminated to a support. The surface protection layer is made of a radiation curable acrylic resin. The transparent thermoplastic resin layer may include acrylic resins and polyolefin based resins.

### [Disclosure]

### [Technical Problem]

The present invention is directed to a multilayer sheet for molding which may maintain high gloss during thermal molding at high temperature.

### [Technical Solution]

In accordance with one aspect, the present invention provides a multilayer sheet for molding in accordance with claim 1, which includes a first thermosetting transparent resin layer, a second thermoplastic transparent resin layer, a decorative layer, and a base sheet sequentially stacked in this order.

### [Advantageous Effects]

In the multilayer sheet according to the present invention, a first thermosetting transparent resin layer continues to protect the surface of the multilayer sheet and a second thermoplastic transparent resin layer maintains moldability during thermal molding, thereby reducing variation in gloss on the surface layer caused by a change in surface microstructure of the base sheet which occurs during molding.

### [Description of Drawing]

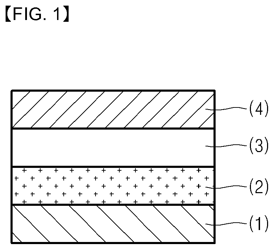

Fig. 1 shows a multilayer sheet which includes a first thermosetting transparent resin layer 1, a second thermoplastic transparent resin layer 2, a decorative layer 3, and a base sheet 4 sequentially stacked in this order.

### [Best Mode]

Exemplary embodiments of the present invention will now be described with reference to the accompanying drawing.

The present invention provides a multilayer sheet for molding, in accordance with claim 1 which includes a first thermosetting transparent resin layer, a second thermoplastic transparent resin layer, a decorative layer, and a base sheet sequentially stacked in this order (see Fig. 1).

Further, the present disclosure provides a method of manufacturing a multilayer sheet for molding, which includes: (1) coating a carrier film with a thermosetting resin composition to form a first resin layer; (2) coating the first resin layer with a thermoplastic resin composition to form a second resin layer; (3) forming a decorative layer on the second resin layer; and (4) removing the carrier film and combining a base sheet with the decorative layer.

The first thermosetting transparent resin layer serves to protect the decorative layer and the second transparent resin layer from impact, and thus has transparency to allow the decorative layer to be exposed therethrough and has high hardness and chemical resistance. With repeated experimentation, the inventors understood that use of a thermosetting transparent resin layer as a first resin layer, i.e. a surface layer, instead of a thermoplastic resin layer provided excellent scratch resistance and wear resistance to the multilayer sheet. Thus, according to the present invention, it is desirable that the first transparent resin layer be composed of a thermosetting resin. Here, the first thermosetting transparent resin layer may be formed using a curable acrylic resin composition. Such a curable resin layer preferably has a thickness of 2 to 25 µm (microns), more preferably, a thickness of 5 to 20 µm (microns) so as not to limit moldability of the sheet in a molding process.

The second transparent resin layer affects gloss and distinctiveness of images (DOI) of the molding sheet. Since the decorative layer is exposed therethrough, it is desirable that the second transparent resin layer have high transparency. Since gloss and DOI of the molding sheet are dependent upon microstructure of the surface layer, the gloss and DOI are determined according to the surface condition of the first transparent resin layer. However, if there is no second resin layer, during thermal molding at high temperature, the surface shape of the base sheet composed of a thermoplastic resin changes, thereby causing a change in microstructure of the first transparent resin layer and making it difficult to maintain gloss and DOI, which were obtained before the molding process. Thus, the second transparent resin layer serves as a buffering layer that prevents the change of the surface shape of the base sheet from affecting the surface of the first transparent resin layer. As a result, even in the molding process at high temperature, the change in the surface shape of the base sheet does not affect the surface layer of the sheet, thereby maintaining high gloss by reducing the rate of gloss change. With repeated experimentation, the inventors recognized that use of a thermoplastic resin layer as the second transparent resin layer instead of a thermosetting resin layer is more effective to reduce the degree of gloss change of the surface layer of base sheet due to the change in surface microstructure of the base sheet which occurs during thermal molding. Such a second thermoplastic transparent resin layer includes TPU, urethane resins, or glycol-modified PET resins. More preferably, the second transparent resin layer is composed of a glycol-modified PET resin. In order to serve as a buffering layer during thermal molding such as vacuum molding, the second thermoplastic transparent resin layer has a softening point of 60 to 300°C, preferably 70 to 220°C, more preferably 80 to 190°C, without being limited thereto. Also, to serve as a buffer layer, the second transparent resin layer can have a thickness from 30 µm (microns) to 400 µm (microns) or from 50 µm (microns) to 400 µm (microns). Considering manufacturing cost, the second transparent resin layer can have a thickness from 50 µm (microns) to 300 µm (microns).

Thus, the most favorable combination of the first and second transparent resin layers is a combination of a thermosetting acrylic resin layer for the first transparent resin layer and a thermoplastic glycol-modified PET resin layer for the second transparent resin layer. In this case, the multilayer sheet may exhibit excellent scratch resistance and wear resistance is excellent while minimizing change in surface gloss due to thermal molding.

Since the base sheet substantially affects mechanical properties of the molding sheet, it is important for the base sheet to have excellent moldability. The base sheet may be selected according to a molding process. For example, in the case of film-insert injection molding, the base sheet may be formed using ABS, PC, PVC, PC/ABS, TPU, olefin resins, or the like. Advantageously, the base sheet may be formed an ABS sheet.

The decorative layer is placed on an upper surface of the base sheet to improve decoration effects of the molding sheet by providing more realistic decoration effects or compensating for aesthetic effects. Such a decorative layer has a print to texturize metal, wood, natural stone, or the like, or a print such as text, figures, or the like for information transmission, thereby providing various aesthetic effects and the effect of information transmission. The decorative layer may be texturized with metal by techniques such as pearl printing, metal deposition, or sputtering.

Next, the present invention will be described in detail with reference to some examples. These examples are provided for illustration only and are not to be in any way construed as limiting the present invention.

### <Example 1>

A first transparent resin layer having a thickness of 10 µm (microns) was fabricated by coating a PET film having a thickness of 25 to 150 µm (microns) with a thermosetting resin composition, which is composed of 100 parts by weight of an acrylic resin, 10 parts by weight of an isocyanate curing agent, 100 parts by weight of methyl ethyl ketone, 60 parts by weight of toluene, 180 parts by weight of methyl isobutyl ketone, and 60 parts by weight of a mixed solvent comprising ethyl acetate. A second thermoplastic transparent resin layer having a thickness of 150 µm (microns) was formed by coating the first transparent resin layer with glycol-modified polyethylene terephthalate (PET). Next, after a desired pattern was printed on the second transparent resin layer by gravure printing, the first transparent resin layer, the second transparent resin layer, and the printed layer were combined on a 400 µm (microns) thick ABS sheet and the PET film was then removed, thereby forming a multilayer sheet for molding (multilayer sheet 1).

### <Example 2> (comparative)

A thermoplastic transparent resin layer having a thickness of 10 µm (microns) was formed by coating a PET film having a thickness of 25 to 150 µm (microns) with glycol-modified PET. A second thermosetting transparent resin layer having a thickness of 150 µm (microns) was formed by coating the first transparent resin layer with a thermosetting resin composition, which is composed of 100 parts by weight of an acrylic resin, 10 parts by weight of an isocyanate curing agent, 100 parts by weight of methyl ethyl ketone, 60 parts by weight of toluene, 180 parts by weight of methyl isobutyl ketone, and 60 parts by weight of a mixed solvent comprising ethyl acetate. Next, after a desired pattern was printed on the second transparent resin layer by gravure printing, the first transparent resin layer, the second transparent resin layer, and the printed layer were combined on a 400 µm (microns) thick ABS sheet and the PET film was then removed, thereby forming a multilayer sheet for molding (multilayer sheet 2).

### <Example 3>

The multilayer sheets of Examples 1 and 2 were stretched, and change in surface layer gloss was measured. As a result, it was ascertained that the rate of gloss change in the multilayer sheet 1 was lower than that of the multilayer sheet 2.

### [Industrial Applicability]

The multilayer sheet of the present invention has improved effects of maintaining high gloss and a pattern of a decorative layer during thermal molding and, as such, the multilayer sheet can be used for various fields such as interior decoration and building materials.

## Claims

1. A multilayer sheet for molding, comprising a first thermosetting transparent resin layer, a second thermoplastic transparent resin layer, a decorative layer, and a base sheet sequentially stacked in this order, wherein the second thermoplastic transparent resin layer comprises TPU, urethane resin, or glycol-modified PET resin.

2. The multilayer sheet according to claim 1, wherein the first transparent resin layer comprises an acrylic resin composition, and the second resin layer comprises a glycol-modified PET resin.

3. The multilayer sheet according to claim 1, wherein the base sheet is formed from ABS, PC, PVC, PC/ABS, TPU or olefin resins.

## Patentansprüche

1. Mehrschichtige Folie zum Formen, mit einer ersten duroplastischen transparenten Harzschicht, einer zweiten thermoplastischen transparenten Harzschicht, einer Dekorschicht und einer Grundfolie, die in dieser Reihenfolge aufeinanderfolgend übereinander geschichtet sind, wobei die zweite thermoplastische transparente Harzschicht TPU, Urethanharz oder glykolmodifiziertes PET-Harz umfasst.

2. Mehrschichtige Folie nach Anspruch 1, wobei die erste transparente Harzschicht eine Acrylharzzusammensetzung und die zweite Harzschicht ein glykolmodifiziertes PET-Harz umfasst.

3. Mehrschichtige Folie nach Anspruch 1, wobei die Grundfolie aus ABS, PC, PVC, PC/ABS, TPU oder Olefinharzen gebildet ist.

## Revendications

1. Feuille multicouche pour moulage, comprenant une première couche de résine thermodurcissable transparente, une deuxième couche de résine thermoplastique transparente, une couche décorative et une feuille de base lesquelles sont superposées successivement dans cet ordre, la deuxième couche de résine thermoplastique transparente comprenant du TPU, de la résine d'uréthane, ou de la résine PET modifiée au glycol.

2. Feuille multicouche selon la revendication 1, la première couche de résine transparente comprenant une composition de résine acrylique, et la deuxième couche de résine comprenant une résine PET modifiée au glycol.

3. Feuille multicouche selon la revendication 1, la feuille de base étant réalisée à partir d'ABS, de PC, de PVC, de PC/ABS, de TPU ou de résines d'oléfines.
